# EUROPÄISCHE PATENTSCHRIFT

(11) **EP 0 981 443 B1**
(45) Veröffentlichungstag und Bekanntmachung des Hinweises auf die Patenterteilung: **18.07.2001**
(21) Anmeldenummer: 98933508.8
(22) Anmeldetag: 13.05.1998
(51) Int. Cl.: B41F 13/008, F16D 3/18, F16D 3/72, F16D 3/79

(54) **ANTRIEB FÜR EIN ROTIERENDES BAUTEIL EINER ROTATIONSDRUCKMASCHINE**
DRIVE FOR A ROTATING COMPONENT OF A ROTARY PRINTING PRESS
DISPOSITIF D'ENTRAINEMENT POUR COMPOSANT TOURNANT D'UNE ROTATIVE

(30) Priorität: 14.05.1997 DE 19720240
(43) Veröffentlichungstag der Anmeldung: 01.03.2000
(73) Patentinhaber: Koenig & Bauer Aktiengesellschaft, 97080 Würzburg (DE)
(72) Erfinder: WESCHENFELDER, Kurt, Johannes, D-97299 Zell am Main (DE)
(86) Internationale Anmeldenummer: DE9801315
(87) Internationale Veröffentlichungsnummer: WO9851497

(56) Entgegenhaltungen:
- EP-A- 0 669 208
- GB-A- 1 160 538
- US-A- 3 584 474
- US-A- 4 831 858

## Beschreibung

Die Erfindung betrifft einen Antrieb eines Zylinders oder Walze einer Rotationsdruckmaschine gemäß dem Oberbegriff des Anspruches 1.

Die DE 94 22 044 U1 und die DE 43 22 744 A1 beschreiben jeweils einen direkt angetrieben Zylinder einer Rotationsdruckmaschine. Dieser Zylinder ist in Exzenterbuchsen ortsveränderbar gelagert und wird jeweils von einem ebenfalls ortsveränderbaren Elektromotor angetrieben.

Die US 48 31 858 A offenbart einen Antrieb für eine vertikal arbeitende Mühle. Dabei ist ein von der Mühle wegweisendes Ende des Hohlwellenmotors mittels einer Gelenkwelle mit der Mühle verbunden. Die Mühle selbst ist ortsfest angeordnet. Die diesem Patent zugrundeliegende Aufgabe ist die Reduzierung von Bauhöhe.

Die GB 11 60 538 zeigt einen Antrieb für einen schrägzustellenden Zylinder. Der Zapfen des Zylinders ist mittels eines Wälzlagers in einer Exzenterbuchse gelagert. Auf der Exzenterbuchse ist das Zahnrad drehbar angeordnet. Antriebszahnrad und Zapfen sind mittels einer Doppelgelenkkupplung verbunden. Aufgabe dieser Anordnung ist, Zahneingriffsstörungen zu vermeiden.

Der Erfindung liegt die Aufgabe zugrunde, einen Antrieb eines Zylinders oder Walze einer Rotationsdruckmaschine zu schaffen.

Die Aufgabe wird erfindungsgemäß durch die Merkmale des Anspruches 1 gelöst.

Die mit der Erfindung erzielbaren Vorteile bestehen insbesondere darin, daß bei rotierenden Bauteilen deren Drehachse ortsveränderbar bzw, lageveränderbar ist, eine Änderung eines Kippwinkels einer Koppel zwischen Bauteil und Antriebsmotor minimiert wird. Damit wird eine Belastung von Ausgleichskupplungen reduziert.

Die Erfindung ist in der Zeichnung dargestellt und wird im folgenden näher beschrieben.
Es zeigen:

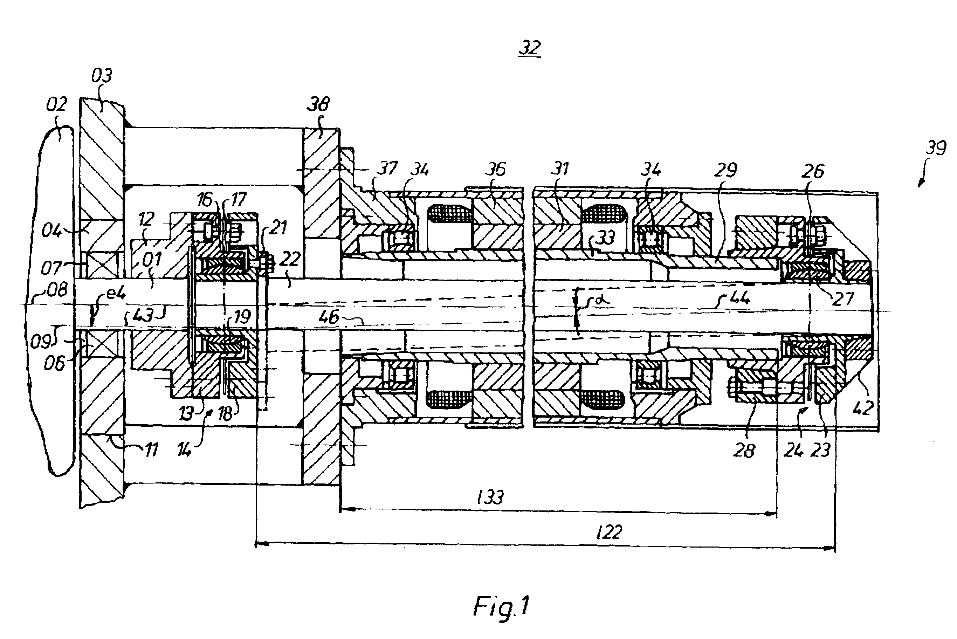

- Fig. 1: eine schematigchs Darstellung eines Antriebes eines rotierenden Bauteilea.

Ein Zapfen 01 eines rotierendes Bauteiles 02, z.B. einer walze eines Farb- bzw. Feuchtwerkes oder eines Zylinders 02 eines Druckwerkes bzw. Falzapparates einer Rotationsdruckmaschine ist in einem Seitengestell 03 mittels einer Exzenterbuchse 04 ortsveränderbar gelagert. Dabei ist ein Zapfen 01 des Zylinders 02 mittels eines Lagers 06 in einer Bohrung 07 der Exzenterbuchse 04 gelagert. Eine Längsachse 08 dieser Bohrung 07 der Exzenterbuchse 04 ist zu einer Längsachse 09 einer äußeren Mantelfläche 11 um eine Exzentrizität e4 versetzt. Diese Exzenterbuchse 04 ist im Seitengestell 03 mittels eines nichtdargestellten Antriebes schwenkbar angeordnet.
An einem zylinderfernen Ende des Zapfens 01 ist an einem zapfenfesten Flansch 12 eine erste Kupplungshälfte 13 einer Kupplung 14, z. B. einer Federscheibenkupplung befestigt. An dieser ersten Kupplungshälfte 13 ist mittels Gewindebolzen 16 ein drehsteifes übertragungselement 17, z. B. eine Scheibe aus Federstahl angeordnet. Dieses übertragungselement 17 ist auch mit einer zweiten Kupplungshälfte 18 drehsteif mittels Gewindebolzen verbunden.
Zur Gewährleistung einer genauen radialen Ausrichtung der beiden Kupplungshälften 13; 18 zueinander ist in einer Bohrung der ersten Kupplungshälfte 13 ein Außenring eines Wälzlagers, z. B. eines Einstellagers 19 mit konkaver Innenfläche angeordnet. Ein Innenring des Einstellagers 19 mit konvexer Außenfläche ist auf einem Zapfen der zweiten Kupplungshälfte 18 befestigt.
An einer zylinderfernen Stirnseite der zweiten Kupplungshälfte 18 ist ein Flansch 21 einer Koppel 22, z. B. einer drehsteifen Welle 22 angeschraubt. Ein zweites zylinderfernes Ende der Welle 22 ist mit einer Kupplungshälfte 23 einer zweiten Kupplung 24 beispielsweise mittels eines Spannelementes verbunden. Die zweite Kupplung 24 ist ähnlich der ersten Kupplung 14 als Winkelabweichungen ausgleichende Kupplung 14; 24 aufgebaut. Auch bei der zweiten Kupplung 24 ist die erste Kupplungshälfte 23 mittels eines übertragungselementes 26 und eines Einstellagers 27 mit einer zweiten Kupplungshälfte 28 verbunden.

Diese zweite Kupplungshälfte 28 der Kupplung 24 ist mit einem zylinderfernen Ende 29 eines Rotors 31 eines Motors 32, beispielsweise eines lage- und/oder drehzahlgeregelten Elektromotors verbunden. Eine Übertragung eines Drehmomentes vom Motor 32 an den Zapfen 01 erfolgt vorzugsweise ausschließlich vom zylinderfernen Ende 29 des Rotors 31 aus, d. h, ein zylindernahes Ende des Rotors 31 weist keine drehmomentenübertragende Verbindung mit dem Zapfen 01 auf.

Dieser Rotor 31 des Hohlwellenmotor 32 weist eine Hohlwelle 33 auf, Eine Länge 133 dieser Hohlwelle 33 ist kürzer als eine Länge 122 der Koppel 22.
Der Rotor 31 ist mittels Lager 34, z. B. Wälzlager bezüglich eines Stators 36 des Motors 32 drehbar gelagert.
Der Stator 36 ist mit seinem Flansch 37 an einem seitengestellfesten Träger 38 angeschraubt. Der Motor 32 ist also ortsfest am Seitengestell 03 befestigt. Lediglich zur Montage kann dieser Motor 32 feinjustierbar sein

In einer ersten Stellung sind eine Rotationsachse 43 von Zylinder 02 und eine Rotationsachse 44 des Rotors 31 sowie eine Rotationsachse 46 der Welle 22 parallel zueinander und fluchtend angeordnet. Durch Schwenken der Exzenterbuchse 04 wird der Zylinder 02 in eine zweite Stellung gebracht. Dadurch ändert sich die Lage der Rotationsachse 43 des Zylinders 02. Diese Rotationsachse 43 kann nun beispielsweise parallel versetzt zu der Rotationsachse 44 des Motors 32 sein (dies ist der Fall wenn beide Exzenterbuchsen 04 der Zapfen 01 des Zylinders 02 gleich geschwenkt werden) oder auch in einem Winkel schräggestellt zur Rotationsachse 44 des Motors 32 sein (beispielsweise nur eine Exzenterbuchse 04 geschwenkt).
Im Ausführungsbeispiel ist die Rotationsachse 43 des Zylinders 02 parallel versetzt zu der Rotationsachse 44 des Motors 32. Dadurch wird auch das zylindernahe Ende der Koppel 22 verlagert, während das zylinderferne, mit dem Rotor 31 verbundene Ende ortsfest beleibt. Die Rotationsachse 46 der Koppel 22 ist nun unter einem Winkel Alpha geneigt zur Rotationsachse 44 des Rotors 31 angeordnet.

Vorzugsweise wird der erfindungsgemäße Antrieb für direkt angetriebene Zylinder (ohne zwischengeschaltete Getriebe) verwendet. Diese Zylinder können einzeln angetrieben sein cder auch beispielsweise weitere Zylinder z. B. über Zahnräder antreiben.

### Bezugszeichenliste

- 01: Zapfen
- 02: Bauteil, Zylinder
- 03: Seitengestell
- 04: Exzenterbuchse
- 05: -
- 06: Lager
- 07: Bohrung (04)
- 08: Längsachse (07)
- 09: Längsachse (11)
- 10: -
- 11: Mantelfläche (04)
- 12: Flansch (01)
- 13: Kupplungshälfte (14)
- 14: Kupplung, erste
- 15: -
- 16: Gewindebolzen
- 17: übertragungselement
- 18: Kupplungshälfte (14)
- 19: Einstellager
- 20: -
- 21: Flansch (22)
- 22: Koppel, Welle
- 23: Kupplungshälfte (24)
- 24: Kupplung, zweite
- 25: -
- 26: übertragungselement
- 27: Einstellager
- 28: Kupplungshälfte (24)
- 29: Ende (31)
- 30: -
- 31: Rotor (32)
- 32: Motor, Hohlwellenmotor
- 33: Hohlwelle (31)
- 34: Lager
- 35: -
- 36: Stator (32)
- 37: Flansch (36)
- 38: Träger
- 39: -
- 40: -
- 41: -
- 42: -
- 43: Rotationsachse (02)
- 44: Rotationsachse (31)
- 45: -
- 46: Rotationsachse (22)

- e4: Exzentrizität

## Patentansprüche

1. Antrieb eines Zylinders (02) oder einer Walze in einer Rotationsdruckmaschine mittels eines ortsfesten Hohlwellenmotors (32), wobei die Rotationsachse (43) des rotierenden Zylinders (02) oder der Walze lageveränderbar ist und wobei das von dem anzutreibenden Zylinder (02) oder der Walze wegweisende Ende (29) des Rotors (31) des Hohlwellenmotors (32) mit einer ersten, Winkelabweichungen ausgleichenden Kupplung (24) und der Zylinder (02) oder die Walze mit einer zweiten, Winkelabweichungen ausgleichenden Kupplung (14) verbunden sind, wobei die beiden Kupplungen (14; 24) mittels einer in der Hohlwelle (33) des Hohlwellenmotors (32) angeordneten Koppel (22) verbunden sind.

2. Antrieb nach Anspruch 1, dadurch gekennzeichnet, daß ein Zapfen (01) des rotierenden Zylinders (02) oder der Walze lageveränderbar angeordnet ist.

3. Antrieb nach Anspruch 2, dadurch gekennzeichnet, daß der Zapfen (01) des rotierenden Zylinders (02) oder der Walze in einer Exzenterbuchse (04) gelagert ist.

4. Antrieb nach Anspruch 1, dadurch gekennzeichnet, daß die Walze in einem Farbwerk oder Feuchtwerk angeordnet ist.

5. Antrieb nach Anspruch 1, dadurch gekennzeichnet, daß der Zylinder (02) in einem Druckwerk angeordnet ist.

6. Antrieb nach Anspruch 1, dadurch gekennzeichnet, daß der Zylinder (02) in einem Falzapparat angeordnet ist.

7. Antrieb nach Anspruch 1, dadurch gekennzeichnet, daß eine Lage des ansonsten ortsfesten Motors (32; 41) feinjustierbar ist.

## Claims

1. Drive for a cylinder (02) or a roll in a rotary printing machine by means of a fixed-location hollow-shaft motor (32), it being possible for the position of the axis of rotation (43) of the rotating cylinder (02) or the roll to be varied, and that end (29) of the rotor (31) of the hollow-shaft motor (32) which points away from the cylinder (02) or roll to be driven being connected to a first coupling (24) that compensates for angular deviations, and the cylinder (02) or the roll being connected to a second coupling (14) that compensates for angular deviations, the two couplings (14; 24) being connected by means of a coupler (22) arranged in the hollow shaft (33) of the hollow-shaft motor (32).

2. Drive according to Claim 1, characterized in that a journal (01) of the rotating cylinder (02) or the roll is arranged such that its position can be varied.

3. Drive according to Claim 2, characterized in that the journal (01) of the rotating cylinder (02) or the roll is mounted in an eccentric bush (04).

4. Drive according to Claim 1, characterized in that the roll is arranged in an inking unit or damping unit.

5. Drive according to Claim 1, characterized in that the cylinder (02) is arranged in a printing unit.

6. Drive according to Claim 1, characterized in that the cylinder (02) is arranged in a folder.

7. Drive according to Claim 1, characterized in that a position of the otherwise fixed-location motor (32; 41) can be finely adjusted.

## Revendications

1. Dispositif d'entraînement d'un cylindre (02) ou d'un rouleau dans une machine à imprimer rotative, au moyen d'un moteur à arbre creux (32) localement fixe, la position de l'axe de rotation (43) du cylindre rotatif (02) ou du rouleau étant modifiable, et l'extrémité (29), s'éloignant du cylindre (02) ou du rouleau à entraîner, du rotor (31) du moteur à arbre creux (32) étant reliée à un premier accouplement (24) compensant les écarts angulaires, et le cylindre (02) ou le rouleau étant relié à un deuxième accouplement (14) compensant les écarts angulaires, les deux accouplements (14 ; 24) étant reliés au moyen d'un élément de couplage (22) disposé dans l'arbre creux (33) du moteur à arbre creux (32).

2. Dispositif d'entraînement selon la revendication 2, caractérisé en ce qu'un tourillon (01) du cylindre rotatif (02) ou du rouleau est disposé de façon à ce que sa position puisse être modifiée.

3. Dispositif d'entraînement selon la revendication 2, caractérisé en ce qu'un ce que le tourillon (01) du cylindre rotatif (02) ou du rouleau est monté dans une douille à excentrique (04).

4. Dispositif d'entraînement selon la revendication 1, caractérisé en ce que le rouleau est disposé dans un groupe d'encrage ou un groupe humidificateur.

5. Dispositif d'entraînement selon la revendication 1, caractérisé en ce que le cylindre (02) est disposé dans un groupe d'impression.

6. Dispositif d'entraînement selon la revendication 1, caractérisé en ce que le cylindre (02) est disposé dans un appareil de pliage.

7. Dispositif d'entraînement selon la revendication 1, caractérisé en ce que la position du moteur (32 ; 41), par ailleurs localement fixe, peut être réglée par un ajustement fin.
